# EUROPÄISCHE PATENTSCHRIFT

(11) **EP 1 390 249 B1**
(45) Veröffentlichungstag und Bekanntmachung des Hinweises auf die Patenterteilung: **03.05.2006**
(21) Anmeldenummer: 02774021.6
(22) Anmeldetag: 18.05.2002
(51) Int. Cl.: B62D 5/04

(54) **LENKUNG FÜR KRAFTFAHRZEUGE**
STEERING SYSTEM FOR MOTOR VEHICLES
DIRECTION POUR VEHICULES A MOTEUR

(30) Priorität: 31.05.2001 DE 10126423
(43) Veröffentlichungstag der Anmeldung: 25.02.2004
(73) Patentinhaber: ZF Lenksysteme GmbH, 73527 Schwäbisch Gmünd (DE)
(72) Erfinder: BAREIS, Helmut, 73569 Eschach (DE)
(86) Internationale Anmeldenummer: PCT/EP2002/005527
(87) Internationale Veröffentlichungsnummer: WO 2002/096741

(56) Entgegenhaltungen:
- EP-A- 0 856 720

## Beschreibung

Die Erfindung betrifft eine Lenkung für Kraftfahrzeuge, insbesondere eine Zahnstangenlenkung für Personenkraftwagen, gemäß dem Oberbegriff des Anspruches 1.

Lenkungen der vorgenannten Art sind aus der DE 197 03 903 A1 bekannt. Bei diesen bekannten Lenkungen ist als fahrerseitige Lenkeingabe ein Lenkrad vorgesehen, und über ein Lenkgetriebe mit als Ritzel ausgebildetem Lenkspindelteil erfolgt die Übertragung der fahrerseitig eingegebenen Lenkbefehle auf zu den zu lenkenden Rädern führende Lenkgestänge, die mit der mit dem Ritzel kämmenden Zahnstange verbunden sind. Die Verbindung des dem Lenkgetriebe zugehörigen und im Lenkgetriebegehäuse gelagerten Lenkspindelteiles zum Lenkrad erfolgt bei der bekannten Lösung mechanisch. Der das Ritzel umfassende Lenkspindelteil ist im Lenkgehäuse beidseitig des Ritzels gelagert, wobei die eingangsseitige Lagerung durch ein Wälzlager gebildet ist, das den Lenkspindelteil axial abstützt und das gegenüber dem Lenkgetriebegehäuse über einen gegenüber diesem verschraubbaren Spannkörper fixiert ist. Am zur axial abstützenden Lagerung gegenüberliegenden Ende läuft der das Ritzel bildende Lenkspindelteil in einem geschlossenen Raum des Getriebegehäuses aus und trägt einen Dauermagneten, dem außenseitig zum Gehäuse ein feststehender, magnetfeldempfindlicher Sensor zugeordnet ist, der über einen deckelartig auf das Lenkgetriebegehäuse aufsteckbaren Sensorträger gehalten und geschützt ist.

Die Zuordnung der axialen Abstützung des im Lenkgetriebegehäuse gehaltenen Lenkspindelteiles und der Lenkwinkelsensorik zu gegenüberliegenden Enden des Lenkgetriebegehäuses schränkt die baulichen Möglichkeiten insbesondere auch hinsichtlich einer möglichst kompakten Bauweise des Lenkgetriebes ein und kann, auch unter Montage- und Kostengesichtspunkten, nachteilig sein.

Aus der Praxis ist es desweiteren für Zahnstangenlenkungen bekannt, diese im Lenkgetriebegehäuse an ihrem der Eingabeseite gegenüberliegenden Ende bezüglich des im Lenkgetriebegehäuse liegenden Spindelteiles über eine axial eingespannte Wälzlagerung zu fixieren.

Der Erfindung liegt die Aufgabe zugrunde, eine Lenkung für Kraftfahrzeuge der eingangs genannten Art dahingehend auszugestalten, dass sich eine besonders einfache und kostengünstige Bauweise ergibt, die sich durch vorteilhafte Anschlussmöglichkeiten zur Lenkeingabe auszeichnet, insbesondere auch in Verbindung mit Lenkungen, die mit elektrischer Servoverstärkung oder mit elektrischer Übertragung (steer-by-wire) der fahrerseitig über die Lenkeingabe vermittelten Befehle arbeiten.

Eine Lenkung gemäß der Erfindung ist gemäß den Merkmalen des Anspruches 1 gestaltet und zeichnet sich dadurch aus, dass die radial und axial führende Wälzlagerung und die Lenkwinkelsensorik zur Detektierung des Drehwinkels oder von Drehwinkeländerungen am Lenkrad - als Lenkeingabe - dem gleichen Ende, nämlich dem von der Lenkeingabe abgelegenen Ende des Lenkgetriebegehäuses zugeordnet sind, wobei diese Lösung mit einer zur Lagerung radialen Einführung und Halterung für den Lenkwinkelsensor verbunden ist, die eine verkürzte Bauweise ermöglicht, und auch günstige Voraussetzungen für die Integration des Dauermagneten in bereits vorhandene Elemente erbringt. Insbesondere kann eine derartige Lösung auch Vorteile hinsichtlich der Variation der Montagelagen für die Sensorik bieten, da die Zugänglichkeit zum Sensor als dem unter Wartungsgesichtspunkten kritischeren Teil der Lenkwellensensorik nicht an die axiale Zugänglichkeit zum Lenkgetriebe gebunden ist, was sich als vorteilhaft erweist, da die Variationsmöglichkeiten zur Anordnung des Lenkgetriebes und die diesbezüglich gegebenen Raumverhältnisse häufig kritisch sind.

In Verbindung mit der axialen Einspannung des Wälzlagers, die erfindungsgemäß in einfacher Weise über eine Distanzbuchse in Verbindung mit einem Spannkörper erfolgt, der bevorzugt als Deckelteil ausgestaltet ist und damit gleichzeitig auch das Lenkgetriebegehäuse endseitig axial abschließt und abdichtet, kann das Lenkgetriebegehäuse bevorzugt in Achsrichtung beiderseits offen ausgestaltet werden, was für die Fertigung vorteilhaft ist, und es erfolgt die Verspannung des im Gehäuse liegenden Lenkspindelteiles in einfacher Weise gegenüber dem Innenring des über den Außenring gegenüber dem Gehäuse axial verspannten Wälzlagers, wobei die entsprechende Verschraubung über das offene Ende des Lenkgetriebegehäuses möglich ist, die vom Deckel verschlossen wird. Der im Lenkgetriebegehäuse liegende Lenkspindelteil kann gegebenenfalls vormontiert mit dem Lager in das Lenkgehäuse eingesetzt werden und es kann anschließend die Einspannung des Lagers über die Distanzbüchse und das Deckelteil erfolgen. In Verbindung mit der Verschraubung des Lenkspindelteiles gegenüber dem Innenring des axial abstützenden Lagers erweist es sich als zweckmäßig, die entsprechende Schraubmutter mit einer halsartigen Verlängerung, vergleichbar etwa einer Kronenmutter auszugestalten und die halsartige Verlängerung als Halterung für den Dauermagneten auszubilden, so dass besondere Befestigungen entfallen.

In Verbindung mit einer derartigen Ausgestaltung kann der zugeordnete Sensor bei flacher Ausbildung zwischen den Dauermagneten und dem Deckel als Abschluss des entsprechenden Aufnahmeraumes ausgebildet sein, wobei der Sensorträger seitlich einzuschieben ist und die Distanzbuchse in einer weit tolerierbaren Durchführung durchsetzen kann, bei gleichzeitiger Führung und Dichtung zwischen Sensorträger und radialer Aufnahmebohrung für den Sensorträger im Lenkgetriebegehäuse. Zweckmäßigerweise ist dieser zapfenartige Teil des Sensorträgers mit einer Grundplatte gekoppelt, die gleichzeitig als Träger für die elektronischen Schaltungs- und Auswerteeinheiten der Sensorik dienen kann und die in einfacher Weise gegenüber einer Auflagefläche des Lenkgetriebegehäuses fixiert werden kann, so dass sich einfache Montagegegebenheiten ergeben und die Sensorik auch insgesamt gegebenenfalls ohne Schwierigkeiten ausgewechselt werden kann.

Zur Erleichterung der Montage kann es ferner von Vorteil sein, die Distanzbuchse bezüglich ihrer Drehlage zum Aufnahmeraum über eine entsprechende, grob tolerierte Schiebeführung oder dergleichen festzulegen, so dass die Ausrichtung der in der Distanzbuchse vorgesehenen Durchführung auf die entsprechende Bohrung im Gehäuse des Lenkgetriebes im Rahmen der Montage der Distanzbuchse zwangsweise erfolgt.

Weitere Einzelheiten und Merkmale der Erfindung ergeben sich aus den Ansprüchen. Ferner wird die Erfindung nachstehend anhand der Zeichnung mit weiteren Einzelheiten erläutert, wobei die Zeichnung eine schematisierte Schnittdarstellung durch ein Lenkgetriebe zeigt, dem eine Lenkwinkelsensorik zugeordnet ist.

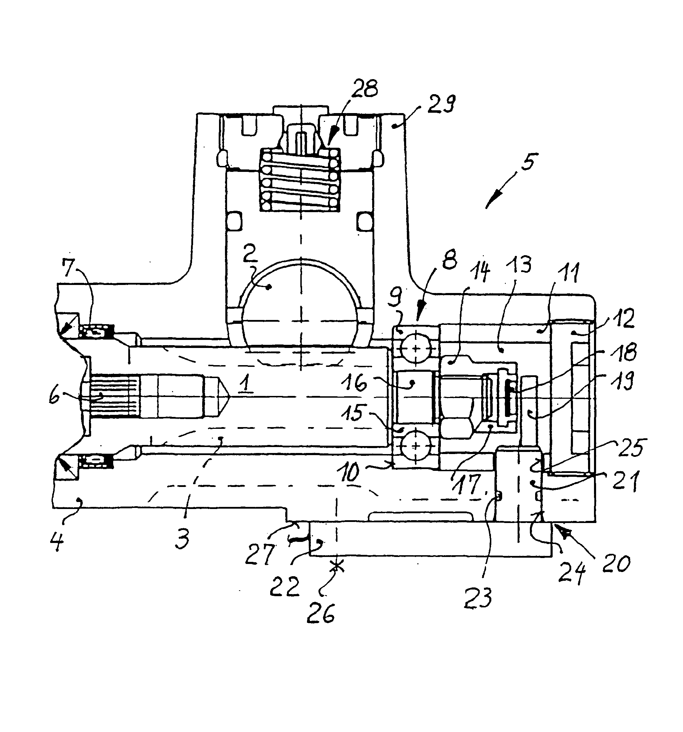

Das im Schema dargestellte Lenkgetriebe ist Bestandteil einer Zahnstangenlenkung für Personenkraftwagen und bezüglich seiner Verbindung zum Lenkrad als vom Fahrer betätigter Lenkeingabe nicht dargestellt. Die diesbezüglichen Teile der Lenkung sind nicht Gegenstand der Erfindung und können beispielsweise gemäß der DE 197 03 903 A1, Fig. 1 ausgestaltet sein, wobei die Verbindung zwischen Lenkrad und Lenkgetriebe mechanisch erfolgt und eine Lenkspindel umfasst, die lenkgetriebeseitig in einem Lenkspindelteil 1 ausläuft, der als mit einer Zahnstange 2 kämmendes Ritzel ausgebildet ist und beiderseits der Ritzelverzahnung 3 im Gehäuse 4 des insgesamt mit 5 bezeichneten Lenkgetriebes gelagert ist. In der Verbindung zur nicht dargestellten Lenkeingabe kann, was ebenfalls nicht gezeigt ist, ein insbesondere elektrisch beaufschlagter Stelltrieb liegen, der als servomotorischer Stell.trieb unterstützend zu über die Lenkeingabe aufgebrachten Lenkkräften wirkt oder der im Sinne einer steer-by-wire-Lenkung die über die Lenkeingabe aufgebrachten Lenkkräfte, die über entsprechende Stellsignale übermittelt werden, in entsprechende Lenkkräfte umsetzt. Eine mögliche drehmomentenübertragende Anschlussverbindung zum Lenkspindelteil 1 ist bei 6 angedeutet.

Dem als Ritzel ausgestalteten Lenkspindelteil 1 sind beiderseits der Ritzelverzahnung 3 im Gehäuse 4 Lagerungen 7, 8 zugeordnet, von denen die eingangsseitige Lagerung 7 durch ein Nadellager gebildet ist und die endseitige Lagerung 8 durch ein Wälzlager, das als Kugellager dargestellt ist und über das der Lenkspindelteil 1 im Gehäuse 4 axial festgelegt ist. Hierzu ist das die Lagerung 8 bildende Wälzlager mit seinem Außenring 9 gegen eine Gehäuseschulter 10 mittels einer Distanzbuchse 11 verspannt, die über einen Deckel 12 beaufschlagt ist, der als Schraubdeckel in die die Aufnahme für das Lenkspindelteil bildende Durchgangsbohrung am vom eingangsseitigen, d.h. der Lenkeingabe benachbarten Ende des Lenkgetriebegehäuses 4 abgelegenen Ende eingesetzt ist.

Die Distanzbuchse 11 überbrückt einen Gehäuseraum 13, in dem die Mutter 14 liegt, über die der Lenkspindelteil 1 gegen den Innenring 15 des Lagers 8 verspannt ist, wobei die Mutter 14 auf den im Gehäuseraum 12 auslaufenden Zapfen 16 des Lenkspindelteils 1 aufgeschraubt ist.

Die Mutter 14 ist im Ausführungsbeispiel hutmutterartig mit einer halsartigen Verlängerung 17 versehen, die über das Ende des Zapfens 16 vorsteht und die als Halterung für einen Dauermagneten 18 ausgebildet ist, der bei axial über den Deckel 12 gegen das Lenkgetriebegehäuse 4 verspannter Lagerung 8 im Gehäuseraum 13 liegt, und zwar in einem Abstand zum Deckel 12, der zwischen Deckel 12 und Magneten 18 die Anordnung eines magnetfeldempfindlichen Sensors 19 ermöglicht, wobei dieser Sensor 19 beispielsweise und bevorzugt als Hallsensor ausgebildet ist. Der Sensor 19 ist in seiner überdeckenden Lage zum Magneten 18 über einen Sensorträger 20 gehalten, der einen Steckzapfen 21 sowie eine mit dem Steckzapfen 21 verbundene Tragplatte 22 umfasst. Der Steckzapfen 21 durchsetzt radial das Lenkspindelgehäuse 4 in einer passenden und beispielsweise über die angedeutete Ringdichtung 23 abgedichteten Bohrung 24, die in Überdeckung zu einer entsprechenden, radialen Durchführung 25 in der Distanzbuchse 11 liegt. Diese Durchführung 25 kann bezogen auf den Steckzapfen 21 entsprechendes Übermaß aufweisen, also grob toleriert sein und im Hinblick auf die Erleichterung der Montage kann es zweckmäßig sein, was nicht dargestellt ist, die Distanzbuchse 11 durch eine entsprechende Führung bezüglich ihrer Durchführung 25 auf die Bohrung 24 auszurichten.

Die Tragplatte 22 ist bevorzugt über eine Verschraubung 26 gegen eine Anlagefläche 27 des Gehäuses 4 verspannt und beispielsweise als Aufnahme für weitere Bauteile, so insbesondere Bauteile einer dem Sensor 19 nachgeschalteten elektronischen Baueinheit ausgestaltet.

Die radiale Zuführung und Halterung des Sensors 19 führt zu einer in der Länge sehr kompakten Ausführung des Lenkgetriebes 5, wobei die Art der Halterung des Dauermagneten 18 den Aufbau weiter vereinfacht und wobei in Verbindung mit der radialen Zuführung und Halterung des Sensors 19 verschiedene Montagelagen bezogen auf den Umfang des Gehäuses 4 möglich ist, was gute Anpassungsmöglichkeiten an die jeweiligen fahrzeugspezifischen Baugegebenheiten ermöglicht.

Die Zahnstange 2 ist gegen den Lenkspindelteil 1 in bekannter Weise, wie bei 28 veranschaulicht, federnd abgestützt und verspannt, wobei die diesbezügliche domartige Aufnahme 29 kein Hindernis für eine Anordnung des Sensorträgers 20 im entsprechenden Umfangsbereich des Gehäuses 4 bildet, wenn dieser bezüglich seiner Tragplatte 27 angepasst oder ausgerichtet wird.

## Patentansprüche

1. Lenkung für Kraftfahrzeuge, insbesondere Zahnstangenlenkung für Personenkraftwagen, mit einer fahrzeugseitigen Lenkeingabe und einem mit der Lenkeingabe gekoppelten, in einem Lenkgetriebegehäuse (5) liegenden Lenkspindelteil (1) mit beidseitiger Lagerung (7, 8) gegenüber dem Lenkgetriebegehäuse (5), Ausbildung einer der Lagerungen (8) als gegenüber dem Lenkgetriebegehäuse (5) axial eingespanntes Wälzlager und Anordnung eines Dauermagneten (18) an einem in einem geschlossenen Raum des Lenkgetriebegehäuses (5) endenden Lenkspindelteil (1), wobei dem Dauermagneten (18) gegenüberliegend ein feststehender magnetfeldempfindlicher Sensor (19) angeordnet ist, dem ein außenseitig mit dem Lenkgetriebegehäuse (5) zu verbindender Sensorträger (20) zugeordnet ist, wobei
das axial eingespannte Wälzlager (8) an dem den Dauermagneten (18) tragenden Endbereich des Lenkspindelteiles (1) vorgesehen ist, **dadurch gekennzeichnet, dass** das Wälzlager (8) über eine Distanzbuchse (11) fixiert ist, die in Verlängerung des Lenkspindelteils (1) von einem den Gehäuseraum (13) endseitig verschließenden Deckel (12) axial beaufschlagt ist und die für den radial zum Sensor (19) liegenden Sensorträger (20) eine radiale Durchführung (25) aufweist.

2. Lenkung nach Anspruch 1,
**dadurch gekennzeichnet ,**
**dass** die Distanzbuchse (11) durch eine Steckhülse gebildet ist.

3. Lenkung nach Anspruch 1 oder 2,
**dadurch gekennzeichnet ,**
**dass** der Deckel (12) in einen Gewindebereich des Gehäuseraumes (13) eingeschraubt ist.

4. Lenkung nach einem der vorhergehenden Ansprüche,
**dadurch gekennzeichnet ,**
**dass** die radiale Durchführung (25) der Distanzbuchse (11) als Bohrung ausgebildet ist.

5. Lenkung nach Anspruch 4,
**dadurch gekennzeichnet ,**
**dass** der Distanzbuchse (11) zum Lenkgetriebegehäuse (4) eine Drehsicherung zugeordnet ist.

6. Lenkung nach Anspruch 4 oder 5,
**dadurch gekennzeichnet ,**
**dass** der Sensorträger (20) einen Steckzapfen (21) aufweist, der in einer zur Durchführung (25) der Distanzbuchse (11) korrespondierenden Führungsbohrung des Lenkgetriebegehäuses (1) gehalten ist.

7. Lenkung nach Anspruch 6,
**dadurch gekennzeichnet ,**
**dass** der Steckzapfen (21) an einer Tragplatte (22) angeordnet ist.

8. Lenkung nach Anspruch 7,
**dadurch gekennzeichnet,**
**dass** der Tragplatte (22) eine Schaltungs- und/oder Auswerteelektronik für den Lenkwinkelsensor (19) zugeordnet ist.

9. Lenkung nach Anspruch 8,
**dadurch gekennzeichnet ,**
**dass** die Tragplatte (22) gegen eine Tragfläche (27) des Lenkgetriebegehäuses (4) verspannbar ist.

10. Lenkung nach einem der Ansprüche 1 bis 3,
**dadurch gekennzeichnet ,**
**dass** der Deckel (12) und die Distanzbuchse (11) eine insbesondere als Montageeinheit ausgebildete Spanneinheit bilden.

## Claims

1. Steering system for motor vehicles, in particular a rack and pinion steering system for automobiles, having a steering input means on the vehicle side, and a steering spindle part (1) which is coupled to the steering input means, lies in a steering mechanism housing (5) and is mounted (7, 8) on both sides with respect to the steering mechanism housing (5), one of the mountings (8) being configured as a roller bearing which is clamped in axially with respect to the steering mechanism housing (5), and a permanent magnet (18) being arranged at a steering spindle part (1) which ends in a closed space of the steering mechanism housing (5), a stationary sensor (19) which is sensitive to magnetic fields being arranged opposite the permanent magnet (18) and having an assigned sensor carrier (20) which is to be connected on the outside to the steering mechanism housings, the roller bearing (8) which is axially clamped in being provided at the end region, which bears the permanent magnet (18), of the steering spindle part (1), **characterized in that** the roller bearing (8) is fixed in position by means of a spacer sleeve (11), which, as an extension of the steering spindle part (1), is acted on axially by a cover (12), which closes the end of the housing chamber (13), and which spacer sleeve (11) has a radial leadthrough (25) for the sensor carrier (20) located radially to the sensor (19).

2. Steering system according to Claim 1, **characterized in that** the spacer sleeve (11) is formed by a plug-in sleeve.

3. Steering system according to Claim 1 or 2, **characterized in that** the cover (12) is screwed into a threaded region of the housing chamber (13).

4. Steering system according to one of the preceding claims, **characterized in that** the radial leadthrough (25) of the spacer sleeve (11) is configured as a bore.

5. Steering system according to Claim 4, **characterized in that** the spacer sleeve (11) to the steering mechanism housing (4) is assigned a rotational securing means.

6. Steering system according to Claim 4 or 5, **characterized in that** the sensor carrier (20) has a plug-in pin (21), which is held in a guide bore, corresponding to the leadthrough (25) of the spacer sleeve (11), of the steering mechanism housing (1).

7. Steering system according to Claim 6, **characterized in that** the plug-in pin (21) is arranged on a support plate (22).

8. Steering system according to Claim 7, **characterized in that** the support plate (22) is assigned switching and/or evaluation electronics for the steering angle sensor (19).

9. Steering system according to Claim 8, **characterized in that** it is possible to clamp the support plate (22) against a support surface (27) of the steering mechanism housing (4).

10. Steering system according to one of Claims 1 to 3, **characterized in that** the cover (12) and the spacer sleeve (11) form a clamping unit which is configured, in particular, as an installation unit.

## Revendications

1. Direction pour véhicules automobiles, notamment direction à crémaillère pour véhicules de tourisme comprenant une entrée de direction du côté du véhicule et une partie arbre de direction (1) couplée avec l'entrée de direction et se trouvant dans un boîtier de mécanisme de direction (5) avec un support (7, 8) des deux côtés par rapport au boîtier de mécanisme de direction (5), réalisation de l'un des supports (8) sous la forme d'un palier à roulement serré dans le sens axial par rapport au boîtier de mécanisme de direction (5) et disposition d'un aimant permanent (18) sur une partie arbre de direction (1) se terminant dans un espace fermé du boîtier de mécanisme de direction (5), l'aimant permanent (18) étant disposé à l'opposé d'un capteur (19) fixe sensible au champ magnétique auquel est associé un porte-capteur (20) à relier du côté extérieur avec le boîtier de mécanisme de direction (5), le palier à roulement (8) serré dans le sens axial étant prévu sur la zone d'extrémité de la partie arbre de direction (1) qui supporte l'aimant permanent (18), **caractérisée en ce que** le palier à roulement (8) est fixé par le biais d'une douille d'écartement (11) qui est sollicitée dans le sens axial dans la prolongation de la partie arbre de direction (1) par un couvercle (12) qui ferme l'espace du boîtier (13) d'un côté et qui présente un passage radial (25) pour le porte-capteur (20) radial par rapport au capteur (19).

2. Direction selon la revendication 1, **caractérisée en ce que** la douille d'écartement (11) est formée par une douille enfichable.

3. Direction selon la revendication 1 ou 2, **caractérisée en ce que** le couvercle (12) est vissé dans une zone taraudée de l'espace du boîtier (13).

4. Direction selon l'une des revendications précédentes, **caractérisée en ce que** le passage radial (25) de la douille d'écartement (11) est réalisé sous la forme d'un alésage.

5. Direction selon la revendication 4, **caractérisée en ce qu'**une sécurité anti-rotation par rapport au boîtier de mécanisme de direction (4) est associée à la douille d'écartement (11).

6. Direction selon la revendication 4 ou 5, **caractérisée en ce que** le porte-capteur (20) présente un tenon d'emboîtement (21) qui est maintenu dans un orifice de guidage du boîtier de mécanisme de direction (1) correspondant au passage (25) de la douille d'écartement (11).

7. Direction selon la revendication 6, **caractérisée en ce que** le tenon d'emboîtement (21) est disposé sur une plaque porteuse (22).

8. Direction selon la revendication 7, **caractérisée en ce qu'**une électronique de commutation et/ou d'évaluation du capteur d'angle de direction (19) est associée à la plaque porteuse (22).

9. Direction selon la revendication 8, **caractérisée en ce que** la plaque porteuse (22) peut être serrée contre une surface porteuse (27) du boîtier de mécanisme de direction (4).

10. Direction selon l'une des revendications 1 à 3, **caractérisée en ce que** le couvercle (12) et la douille d'écartement (11) forment une unité de serrage notamment réalisée sous la forme d'une unité de montage.
